Europäisches Patentamt

European Patent Office

Office européen des brevets

(19)

(11) Numéro de publication: **0 276 191**
**B1**

(12) **FASCICULE DE BREVET EUROPEEN**

(45) Date de publication du fascicule du brevet:
05.09.90

(21) Numéro de dépôt: **88460002.4**

(22) Date de dépôt: **08.01.88**

(51) Int. Cl.⁵: **F16L 7/00**, F24D 3/10,
E03C 1/042

(54) Passage des fluides sous pression dans la maçonnerie.

(30) Priorité: **12.01.87 FR 8700305**

(43) Date de publication de la demande:
**27.07.88 Bulletin 88/30**

(45) Mention de la délivrance du brevet:
**05.09.90 Bulletin 90/36**

(84) Etats contractants désignés:
**DE ES FR GB IT SE**

(56) Documents cités:
**EP-A- 0 085 329**
**EP-A- 0 191 309**
**US-A- 3 097 892**
**US-A- 4 541 615**

(73) Titulaire: **Legris-Société Anonyme dite, 29, rue de la Palestine, F-35014 Rennes Cedex(FR)**

(72) Inventeur: **Belisaire, Daniel, 2 avenue de la Hublais, F-35510 Cesson-Sevigne(FR)**

(74) Mandataire: **Dubreuil, Annie, Cabinet DUBREUIL Le Suffren 23 rue des Peupliers, F-56100 Lorient(FR)**

## Description

L'invention concerne divers boîtiers à noyer dans la maçonnerie et destinés à rendre facile et bon marché le passage de tubes plastiques pour fluides sous pression, lors de leur première installation et de leur entretien futur. Elle concerne plus particulièrement des boîtiers de forme parallélépipédique destinés au passage de fluides sous pression dans une maçonnerie, lesquels boîtiers sont noyés par paire dans la maçonnerie, liés solidairement par des gaines en platique également noyées simultanément dans la maçonnerie.

Il existe pour passer les fils électriques dans les murs, les sols, les plafonds, de très nombreuses sortes de boîtiers, noyés dans la maçonnerie et reliés entre eux par des gaines en plastique, noyées elles aussi. Les fils passent d'un boîtier à l'autre. En général, les boîtiers ont un couvercle démontable, affleurant la maçonnerie, et qui permet l'accès aux fils pour les passer ou les changer.

Dans la distribution d'eau sanitaire où, de plus en plus, on utilise des tubes plastiques, de manière analogue à l'électricité, il est absolument nécessaire de passer ces tubes dans la maçonnerie. En effet, ces tubes sont laids et se déforment beaucoup par dilatation. Il faut donc les cacher et les faire passer par le chemin le plus court pour économiser au maximum de la longueur, car le but de leur emploi est l'abaissement important du prix de la plomberie sanitaire ou industrielle.

Il est aussi impératif de pouvoir les passer et, éventuellement, de les changer en cas d'avaries. D'où l'obligation de les faire glisser dans des gaines appropriées, se terminant à chaque extrémité par des boîtiers noyés dans la maçonnerie. Les boîtiers doivent tenir la gaine solidement pendant la coulée du ciment ou du plâtre, et résister aux efforts auxquels le matériel est soumis sur un chantier de construction.

Le domaine d'emploi de l'invention est plus spécialement la distribution d'eau sanitaire, mais elle trouve également des applications dans le domaine de l'industrie, les laboratoires, l'agriculture, ainsi que dans la distribution de gaz par tubes en plastique.

Il existe assez peu de types de boîtiers pour les tubes plastiques sanitaires, car la technique de distribution d'eau dans les appartements par tubes plastiques débute seulement de façon sérieuse et, avant, n'était que confidentielle.

L'invention concerne des boîtiers de sol ou plafond amenant le tube à peu près perpendiculairement au sol ou au plafond pour qu'il remonte ensuite à un appareil sanitaire ou à un radiateur à eau chaude. Souvent, il y a de 3 à 6, et même jusqu'à 10 mètres de tube à pousser dans le boîtier de départ jusqu'à travers le boîtier d'arrivée. Or, la grosse difficulté que l'on rencontre avec ce type de boîtier, c'est que le tube sanitaire est d'une faible souplesse et que l'on peut parler d'une grande dureté au coudage. On lui demande de faire deux coudes de rayons beaucoup trop petits pour sa dureté,, l'un à l'entrée dans le premier boîtier, et l'autre à la sortie dans le second boîtier. On n'a jamais ces problèmes en électricité où l'on tire un matériel souple avec un fil de fer. De plus, les hauteurs de dalles en ciment de 16 cm, 8 cm (courant), 4 cm (rare), ne permettent que des rayons de courbure très limités, mais non des rayons de courbure normaux, et cela rend le passage très difficile et quasiment impossible avec les boîtiers actuels.

Dans un boîtier actuel, il est impossible de passer le tube quand le boîtier est noyé. Il faut le faire avant cimentage, ce qui est très peu pratique.

On pouvait imaginer qu'un boîtier possédant un canal coudé laisserait facilement passer le tube. L'essai démontre que ce n'est pas le cas et l'effort est encore beaucoup trop important, à cause des frottements exagérés par la cambrure trop forte du tube. Un autre inconvénient important, c'est que le boîtier dépasse souvent du sol, ce qui empêche de lisser celui-ci avec une machine habituelle (dite hélicoptère), d'où de grosses pertes de temps.

Un autre inconvénient est que, une fois noyés dans le béton, les boîtiers sont totalement inaccessibles, ou alors leur ouverture est si étriquée que l'accès ne rend aucun vrai service pour tirer le tube.

Le document EP-A 0 191 309 fait état de boîtiers de forme parallélépipédique conçus pour le passage de fluides sous pression dans la maçonnerie. Toutefois, outre le fait qu'ils ne sont pas destinés au passage de tubes, mais à loger des moyens de connection, ils présentent également l'inconvénient mentionné ci-dessus que leur ouverture est limitée une fois qu'ils ont été noyés dans la maçonnerie.

L'invention permet de surmonter tous les inconvénients du passage du tube d'eau plastique trop raide.

Conformément à l'invention, des boîtiers de forme parallélépipédique destinés au passage de fluides sous pression dans une maçonnerie, lesdits boîtiers étant noyés par paire dans la maçonnerie, liés solidairement par des gaines en plastique également noyées simultanément dans la maçonnerie, et permettant l'installation ou le changement de tubes en plastique pour fluides sous pression devant transiter dans la maçonnerie, lesdits boîtiers faisant office d'entrée ou de sortie desdits tubes sous pression et les orientant à la sortie de la maçonnerie dans une directoin prédéterminée, sont caractérisés en ce qu'un couvercle rectangulaire, lisse, affleurant le dessus du boîtier, présente au moins une capsule à découper, en ce que le côté des boîtiers à l'opposé des capsules comporte le même nombre de courtes tubulures que de capsules, chaque tubulure servant à loger l'extrémité d'une gaine, en ce que des rainures courbées suivant un quart de cercle relient intérieurement des passages ovales, obtenus quand on enlève les capsules, et lesdites tubulures, pour guider latéralement avec jeu les tubes sous pression, et en ce qu'une molette est montée libre en rotation sur un axe transversal, au-dessus de chaque rainure et dans la zone médiane de celle-ci, dont le profil est complémentaire du pourtour desdits tubes, les molettes servant au cintrage desdits tubes et à leur maintien au fond desdites rainures.

Dans des formes de réalisation particulières, ces boîtiers présentent également une caractéristique supplémentaire, ou une combinaison de caractéristiques supplémentaires, telles que définies dans les revendications dépendantes annexées.

Par conséquent, un boîtier suivant l'invention présente en combinaison certains ou tous avantages et particularités suivantes:

1. Il comporte une dent aiguë, avec un secteur à rigidité contrôlée, pour l'accrochage instantané de la gaine plastique.

2. Il est étanche, ainsi que la gaine plastique, au ciment et au lait de ciment.

3. Il se moule dans la dalle de ciment à ras de la dite dalle, sans qu'aucune partie ne dépasse, permettant le lissage de la dalle par les moyens habituels sans perte de temps.

4. Il permet le passage du tube d'eau après toutes les finitions de maçonnerie, avec un effort modéré.

5. Il comporte une rainure lisse et polie pour guider le tube d'eau, entraînant peu d'effort et pas de déformation du tube.

6. Il comporte au fond de la dite rainure une molette à gorge réalisant un véritable cintrage du tube plastique sans déformation de ce dernier et sans frottement, par rotation, selon une technique nouvelle, inverse du classique cintrage des tubes en cuivre à la molette, l'effort de passage du tube plastique étant réduit de moitié, environ.

7. Il comporte, de plus, deux molettes de soutien qui suppriment les deux contacts et frottements du tube d'eau avec la rainure, ce qui réduit au maximum, soit des 3/4 environ, l'effort de passage du tube plastique.

Il est recouvert en totalité par un couvercle démontable procurant un accès parfait et total du boîtier et permettant de surveiller et d'aider le passage du tube plastique. Le couvercle étant au ras de la dalle et le boîtier ne dépassant pas, le lissage de la dite dalle suivant les méthodes normales est possible.

9. Le couvercle comporte une ou plusieurs lumières ovales à découper, préparées à cet effet pour la sortie du ou des tubes d'eau, ou pour leur entrée.

10. Il comporte généralement deux passages côte à côte pour les tubes d'eau, permettant d'amener l'eau chaude et l'eau froide à un appareil sanitaire, ou de faire l'arrivée et le retour d'eau à un radiateur de chauffage, ou d'amener deux tubes quelconques d'eau froide ou chaude d'un point d'un logement à un autre point de ce logement. Le boîtier peut, bien sûr, être conçu pour un seul tube d'eau, de même qu'il peut également être fabriqué pour plus de deux tubes, six passages paraissant une limite raisonnable pour le moulage en plastique du boîtier.

11. Il comporte des trous de fixation permettant sa fixation solide, par des fils de fer, au grillage d'armature de la dalle en béton, afin qu'il ne bouge pas pendant le coulage du béton de la dalle.

12. Il a, avec son couvercle, une hauteur égale ou inférieure à celle de la dalle et il est éventuellement calé pour arriver en hauteur au ras de la dalle. Il a pour cela, des pieds, avec des échancrures pour laisser passer le béton au-dessous.

13. Il a une résistance mécanique telle qu'il résiste à la pression du béton au coulage, aux efforts sur le chantier et au poids d'une personne très lourde qui marche sur le couvercle après moulage.

14. Le dessus du couvercle est recouvert d'une bande de papier autocollant qui le protègera du ciment et qui, enlevée après moulage, permettra d'avoir un couvercle bien propre, bien lisible et facile à démonter.

15. Le couvercle est à encastrement côté sortie ou entrée des tubes, ce qui garantit une forte tenue, et à encliquetage par crans de l'autre côté. Une échancrure, indiquée par une grosse flèche, permet d'un simple coup de tournevis, en faisant levier, de dégager le couvercle qui bascule et s'enlève ensuite facilement. Le couvercle ne peut pas être monté inversé à cause de ses pattes encastrées.

En cas d'ennui, même avec le couvercle monté et recouvert de carrelage ou moquette, il est toujours possible de changer un tube d'eau.

Les boîtiers suivant l'invention sont toujours associés par deux dans une même dalle: un boîtier d'entrée et un boîtier de sortie du ou des tubes d'eau, les deux boîtiers noyés dans la maçonnerie étant reliés entre eux par une ou plusieurs gaines, noyées elles aussi dans la maçonnerie. Les gaines sont constituées d'un tube en plastique épais, parfaitement lisse intérieurement et très résistant pour résister aux efforts d'écrasement et, en particulier, au poids d'une lourde personne qui peut marcher sur les dites gaines sans gêner le passage des tubes d'eau. Les gaines constituent les guides inamovibles, permettant à tout moment de retirer un tube d'eau et de le remplacer par un neuf. Un jeu de coulissement important est prévu entre la gaine et le tube d'eau en plastique spécial, afin d'avoir une circulation facile de ce dernier dans la gaine. Le diamètre intérieur de la gaine est supérieur à la cote maximale d'ovalisation du tube d'eau pour le rayon minimal de coudage possible. Bien entendu, des tubes d'eau beaucoup plus fins que la gaine passent sans difficulté.

La matière plastique des gaines doit être assez souple pour être capable d'accepter des rayons de courbure "normaux" en fonction du diamètre employé, et assez rigide et épaisse pour que l'on puisse marcher dessus sans la déformer sérieusement.

Sa faible dureté de surface permet son accrochage par une dent aiguë disposée dans le boîtier en plastique.

Entre la gaine et le boîtier, il n'y a pas de partie pouvant accrocher ni retenir le tube d'eau et l'empêcher de passer, mais continuité lisse et polie avec rayons polis.

Les boîtiers suivant l'invention étant moulés dans la maçonnerie avec leurs gaines de liaison, ce n'est qu'au stade normal de finition de la plomberie que le réseau sanitaire d'eau chaude et froide des radiateurs de chauffage sera passé, dans un temps réduit par rapport à la plomberie classique en tubes métalliques. Les coûts de l'installation du sanitaire se trouvent très réduits, de près de la moitié, par l'emploi de matières plastiques au lieu de cuivre, et l'énorme économie de temps d'installation des tubes: ces derniers sont passés par une main-d'oeuvre non qualifiée qui est bon marché, car il n'y a pas besoin de soudeurs puisqu'il n'y a aucune soudure. Les tubes sont simplement enfilés dans des raccors à montage instantané ne nécessitant ni vissage, ni soudure, mais qui sont simplement poussés énergiquement au fond de leurs trous spécialement prévus. Mais sans les boîtiers, objet de l'invention, qui amènent en-dessous de chaque appareil sanitaire les tubes d'eau, l'installation ne serait ni rapide, ni fiable, ni même réellement possible économiquement.

On comprend mieux les avantages, les fonctions, la facilité d'emploi et les progrès amenés par les boîtiers suivant l'invention à l'examen des dessins suivants parmi lesquels:

- la figure 1 est une vue en coupe d'un boîtier connu;
- la figure 2 est une vue en coupe d'un autre boîtier connu;
- la figure 3 est une vue en perspective cavalière d'un boîtier suivant l'invention à deux passages;
- la figure 4 est une vue en perspective cavalière d'un boîtier suivant l'invention à quatre passages;
- la figure 5 est une vue en coupe du boîtier de la figure 3, selon la ligne c–d de la figure 6;
- la figure 6 est une vue en coupe du boîtier de la figure 3 ou de la figure 4, suivant l'axe d'un passage;
- la figure 7 est une vue en coupe, suivant l'axe d'un tube plastique d'eau, de deux boîtiers suivant l'invention noyés dans une dalle de béton;
- la figure 8 est une vue en coupe, suivant l'axe d'un passage, d'un autre boîtier suivant l'invention;
- la figure 9 montre, en coupe, un détail des boîtiers suivant l'invention;
- la figure 10 est une vue en coupe montrant le détail des arêtes aiguës d'accrochage des gaines de liaison;
- la figure 11 est une vue similaire à la figure 6, le boîtier étant noyé dans une dalle en ciment;
- la figure 12 est une vue en coupe illustrant une variante du système de tenue étanche sur le boîtier d'une gaine de liaison.

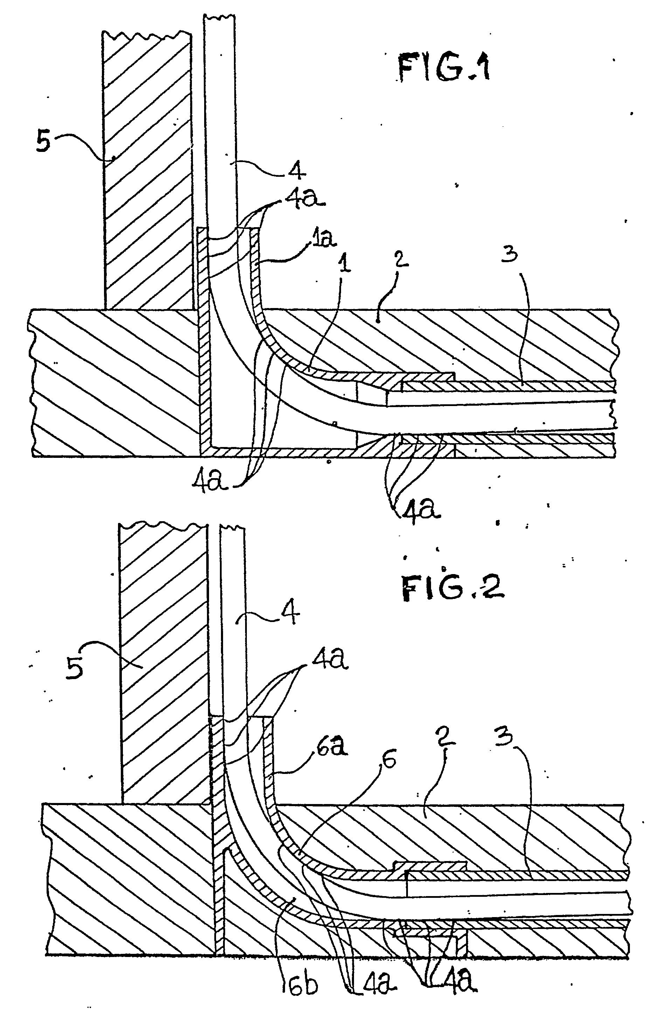

A la figure 1, on voit la technique existante: une boîte creuse (1) en plastique est noyée dans la dalle en béton ainsi qu'une gaine (3) en tube plastique solidarisée par emmanchement ou collage avec la boîte (1). Un tube d'eau (4) en plastique spécial traverse la dalle (2) par la gaine (3) et la boîte (1), et remonte le long d'une cloison (5). La boîte (1) dépasse de la dalle (2) en (1a). Le tube (4) possède une grande raideur, et il est pratiquement impossible de l'installer à travers la boîte noyée (1) dans la dalle (2). On l'installe donc avant de couler la dalle, ce qui est très gênant pour les opérations de maçonnerie. Le dépassement (1a) du boîtier (1) et celui du tube (4) empêchent le passage de la machine (dite hélicoptère) à planer le ciment frais de 24 heures. Il y a d'autre part 3 zones de contact (4a) à grand effort de friction qui gênent et rendent presque impossible le glissement du tube (4), nécessaire pour le placer. Les boîtiers étant toujours associés par 2, cela fait 6 zones de contact (4a) qui résistent au déplacement du tube (4). Il y a de grosses pertes de temps et d'argent sur la maçonnerie, qui annulent les économies de l'emploi du tube en plastique (4). Ce système ne convient pas.

A la figure 2, on a représenté une boîte (6) comportant un canal coudé lisse (6b) de section circulaire, guidant le tube (4) et qui paraît facile à utiliser. En pratique, il n'en est rien car le tube d'eau (4) a encore (comme à la figure 1) 3 zones de contact à grand frottement (4a) dues à l'effort ressort du tube au passage. L'association des boîtiers d'entrée et de sortie de la dalle (2) porte à 6 zones à grand frottement l'effort de glissement du tube (4). Comme à la figure 1, il est quasiment impossible de passer le tube (4) après coulage de la dalle: c'est beaucoup trop dur.

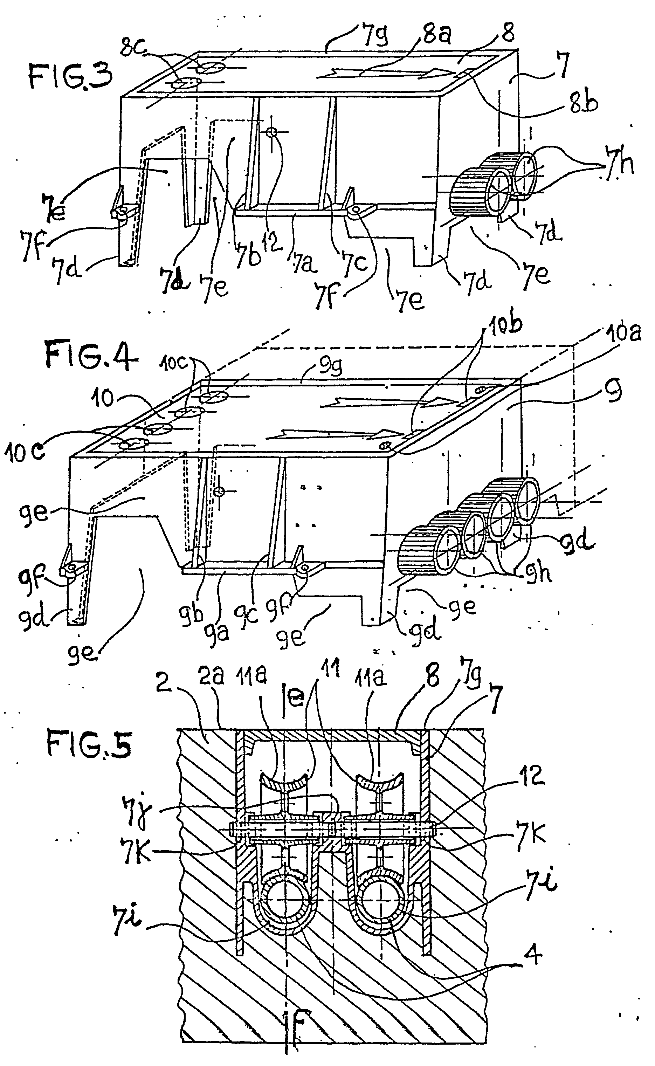

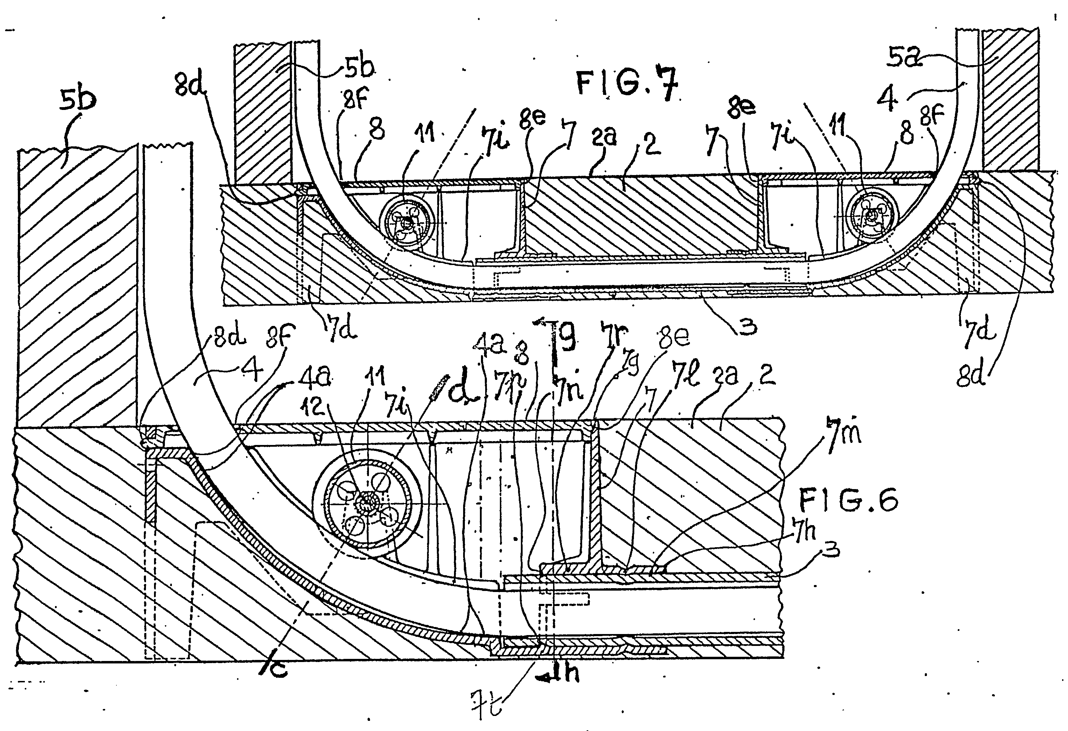

A la figure 3, un boîtier (7) conforme à l'invention est prêt à être noyé dans le béton de la maçonnerie. Sa forme extérieure est à peu près un parallélépipède renforcé par des nervures (7b), (7c). Le boîtier (7) a 4 pieds (7d) et de larges échancrures (7e) permettant au béton de passer sous lui pour bien le bloquer. Quatre trous (7f) permettent de fixer le boîtier (7) à l'armature en acier de la dalle pour l'immobiliser solidement pendant le coulage du ciment. Le haut (7g) du boîtier, prévu pour affleurer la surface de la dalle en ciment, comporte un couvercle ouvrant (8) faisant toute la surface du boîtier (7) et possédant une grosse flèche (8a) dont la pointe indique un cran creux (8b) qui est destiné au démontage du couvercle (8) par levier avec un simple tournevis, le dit couvercle étant encliqueté sur le boîtier (7). Le couvercle (8) possède deux capsules (8c) à casser, après avoir noyé le boîtier (7) dans la maçonnerie, pour ouvrir les passages d'entrée ou de sortie des tubes d'eau. Deux embouts spéciaux (7h) sont destinés à recevoir les gaines (tubes plastique épais) qui, noyées elles aussi dans la maçonnerie, relieront 2 boîtiers identiques, un d'entrée et un de sortie, de la dalle en maçonnerie. Les tubes d'eau traversent le boîtier (7) de (7h) vers (8c) en suivant un trajet courbe et bien particulier à l'invention. Ils pourront véhiculer l'eau chaude ou l'eau froide, vers un ou deux robinets de sanitaire (lavabo-baignoire), ou réaliser un aller et retour vers un radiateur de chauffage à eau, ou vers deux circuits d'eau froide ou deux circuits d'eau chaude. Le circuit intérieur est visible en coup à la figure 6. Le boîtier est étanche au ciment liquide.

A la figure 4, un boîtier (9) conforme à l'invention, comporte 4 passages de tubes d'eau au lieu de 2. En pointillé est représentée la possibilité d'avoir un boîtier avec 6 tubes d'eau, ce qui paraît un maximum pour le moulage en plastique du dit boîtier. L'immense couvercle est pourvu de 2 vis (10a) de fixation pour plus de sécurité. Deux crans (10b) permettent le déboîtage du couvercle au tournevis.

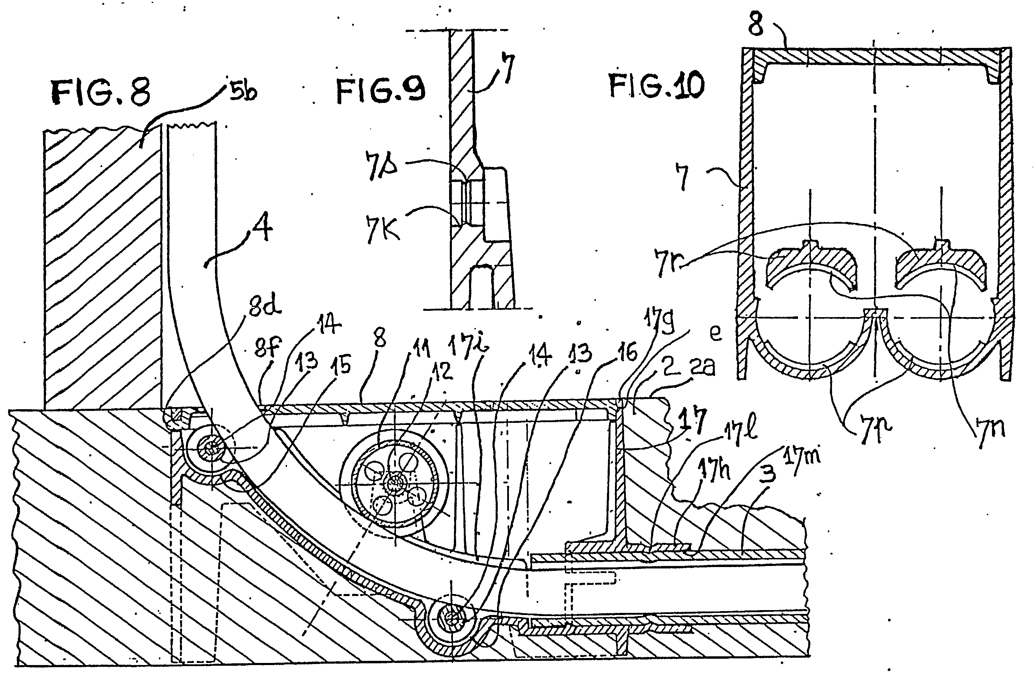

A la figure 5, le boîtier (7) est noyé dans une dalle en maçonnerie. La coupe, par l'axe (12) des molettes de cintrage (11), fait apparaître les profondes rainures (7i) de guidage des tubes d'eau (4) qui sont maintenus dans celles-ci sans en toucher le fond, par les dites molettes de cintrage (11). Ces dernières ont des profils annulaires circulaires (11a). En tournant, elles évitent tout contact de frottement. Les molettes (11) tournent très librement sur leur axe (12). Ainsi un des points fondamentaux de l'invention est le remplacement du frottement principal sur les tubes d'eau (4) par un roulement parfaitement libre et sans frottement. On verra à la figure 6 que ce roulement effectue un véritable cintrage du tube plastique suivant une méthode complètement nouvelle comme application à ce type de boîtier. L'axe (12) des molettes (11) comporte 3 points de tenue: deux paliers étanches au ciment (7k), figure 9, et un palier central (7j) à encliquetage de l'axe. Chaque molette (11) est indépendante et très bien tenue entre deux paliers (7k) et 7(j), afin de résister aux efforts importants de cintrage qu'exerce le tube d'eau (4) à son passage dans le boîtier (7).

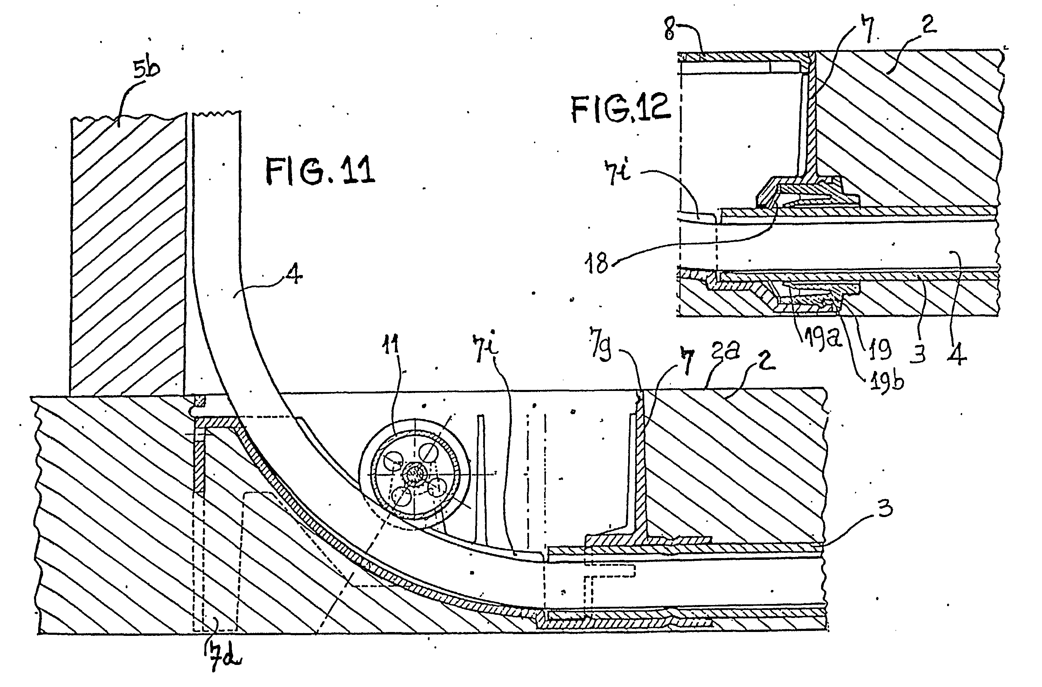

A la figure 6, on voit qui le couvercle (8) du boîtier (7) couvre la totalité de ce dernier au ras du niveau du haut de la dalle (2). On voit que la gaine (3) de guidage du tube (4) est emmanchée à fond dans le guidage (7m) du boîtier. La gaine plastique (3) a un point d'étanchéité au ciment liquide en (71) où le boîtier donne un léger serrage élastique sur la gaine (3), elle même déformable. La gaine (3) est cramponnée de façon positive au boîtier (7) par les dents aiguës (7p) et (7n). Les dents (7p) sont aménagées dans des berceaux fixes (7t) solidaires du boîtier (7) alors que les dents (7n) sont aménagées dans des secteurs élastiques (7r) à fort serrage sur la gaine (3) de sorte qu'elle devient inarrachable pendant les opérations de coulage de la dalle ciment (2). Les détails de (7r), (7n), (7p) sont visibles à la figure 10. On voit également à la figure 6, la profonde rainure (7i) (visible aussi à la figure 5) qui prolonge la gaine (3) en forme de 1/4 de cercle, pour amener le tube (4) de la position horizontale à la position vericale, le long de la cloison (5b). Le fond en plastique de la rainure (7i) est glacé de façon à réduire au minimum es deux frottements du tube (4) sur le boîtier (7) aux contacts (4a) aux deux extrémités de la rainure (7i). Dans la partie médiane de la rainure (7i), le tube est maintenu écarté du fond par la molette (11) qui établit un contact roulant libre "sans frottement" sur le tube (4). On a ainsi dans l'invention supprimé totalement le frottement central (4a) qui était visible dans les solutions classiques illustrées aux figures 1 et 2. L'emploi d'une rainure ouverte (7i) et d'une molette (11) réduit de moitié l'effort de passage du tube, le rendant tout à fait possible. La solution à une seule molette, la plus économique est tout à fait acceptable. Le système, qui oblige "à pousser" le tube d'eau (4) à travers le boîtier, force le tube à se cintrer selon un rayon beaucoup plus faible que le rayon de la couronne sur laquelle il est prélevé. Un vrai cintrage original du tube plastique est ainsi réalisé: le tube sort cintré du boîtier. Le chemin fixe du tube (4) (rainure 7i) et la molette (11) à axe (12) fixe, et le moyen de déplacement axial du tube constituent, au moins dans un boîtier, une méthode nouvelle et originale de cintrage d'un tube en plastique. Les systèmes classiques emploient au contraire un tube fixe, un soutien 1/2 rond fixe à l'intérieur de le courbure et une molette mobile décrivant un cercle à l'extérieur du tube autour du soutien intérieur, forçant le tube fixe autour du soutien central: c'est le classique outil du commerce à cintrer les tubes. Le passage du tube (4) n'est fait qu'après finition complète de la maçonnerie, de laquelle rien ne dépasse. La dalle (2) reste parfaitement lisse et dégagée.

Ensuite, il convient d'examiner la figure 7 qui explique le montage à travers une dalle de plancher (2) d'un point à un autre de cette dalle (2).

Deux boîtiers (7) sont reliés par une gaine de liaison (3) en plastique, accrochée aux deux boîtiers, la dite gaine (3) étant également noyée dans la dalle (2) et servant de chemin avec un large jeu à un tube plastique (4) qui, passant horizontalement à travers la dalle (2) par la dite gaine (3), est contraint, par les boîtiers (7), de remonter perpendiculairement à la dalle (2) le long des cloisons verticales (5a) et (5b). Le tube (4) traverse également les couvercles (8) des boîtiers (7) par des lumières ovales (8f), bien visibles à la figure 6. Par ces lumières ovales (8f), il est possible d'enlever et de changer pour entretien, le tube (4) sans démonter les couvercles (8) des deux boîtiers (7), dont l'un est le boîtier de départ et l'autre le boîtier d'arrivée, malgré qu'ils soient identiques.

Pour le premier montage du tube (4), on dégrafe avec un tournevis les couvercles (8) afin de passer très commodément le tube (4). Ensuite, on fait sauter d'un coup de tournevis ou de couteau les capsules (8c) du couvercle (figure 3). En dernier lieu, on passe le tube (4) à travers les lumières (8f) des couvercles (8) que l'on replace en enfonçant d'abord les pattes de tenue (8d) dans les boîtiers (7) et en rabattant les couvercles jusqu'au moment où ils se vérouillent sur la boîte (7) dans les crans (8e) bien visibles à la figure 6. La grandeur des couvercles (8) qui couvrent toute la surface des boîtiers (7) permet un accès total et pratique de l'intérieur des dits boîtiers. Après le premier montage des tubes (4), même si la dalle (2) est recouverte de carrelage ou moquette, il est possible de changer facilement un tube plastique (4) en cas de besoin sans ouvrir le couvercle (8).

A la figure 8, un boîtier (17) suivant l'invention comporte 3 molettes supprimant tous contacts de frottement du tube (4) dans le boîtier (17). La molette (11) et son axe (12) est la molette de cintrage qui, comme à la figure 6, supprime le frottement principal et le remplace par une rotation libre sans frottement. Les molettes (13) de profils identiques ou voisins de celui de la molette (11), et leurs axes (14) sont placés dans des creux (15) et (16) avec jeu. Les molettes dépassent très faiblement de la rainure (17i) pour soutenir le tube (4) et supprimer tout contact de frottement avec la rainure (17i) à ses deux extrémités, en (4a) à la figure 6, les dits frottements étant remplacés par des rotations libres. Ainsi le boîtier (17) est le boîtier le plus perfectionné suivant l'invention, car en supprimant tout frottement, il permet le passage du tube (4) avec le minimum d'effort de coulissement axial. La comparaison de la figure 8 avec les figures 1 et 2 illustran les techniques actuelles montre le grand progrès de l'invention qui supprime tous les contacts de frottement. Le type de boîtier (17) de la figure 8 sera le plus utile avec les tubes (4) les plus gros et les plus raides à passer. Pour des tubes plus fins et moins raides, les boîtiers (7) de la figure 6, plus économiques, peuvent suffire. Hormis les molettes et leur logement, le boîtier (17) est identique aux boîtiers (7) des figures 3, 4, 5, 6 et 7. L'effort axial de passage du tube dans le boîtier (17) est environ reduit des 3/4 par rapport aux figures 1 et 2.

La figure 9 est un détail des paliers (7k) visibles à la figure 5 et de l'étanchéité au ciment de l'axe (12). L'axe (12) des molettes (11) est monté avec jeu dans le palier (7k), mais un petit bourrelet circulaire (7s) donne un léger serrage sur l'axe (12), garantissant l'étanchéité au ciment liquide de l'axe des molettes et leur bonne rotation.

A la figure 10, apparaît le détail des arêtes aiguës (7p) et (7n) d'accrochage des gaines (3), visible également à la figure 6. Ces arêtes font partie du boîtier (7) et viennent directement de moulage. Les dents aiguës (7a) (figure 6) sont fixes et forment un secteur qui pénètre dans la gaine (3). Les dent aiguës (7n) forment un secteur porté par un élément élastique (7r) en poutre libre, mais suffisamment raide pour, d'une part, supporter les tolérances de la gaine (3) et, d'autre part, pénétrer légèrement la gaine (3) et l'accrocher de façon positive et inarrachable, pour résister aux opérations de coulage du ciment sur chantier.

A la figure 11, le couvercle (8), visible à figure 6, (du boîtier 7) a été enlevé, montrant une ouverture d'accès intérieur aussi grande que le boîtier (7) et un accès total pour la surveillance et le contrôle du bon passage des tubes d'eau (4), soit à leur première installation, soit à leur changement.

La figure 12, est une variante de l'étanchéité au ciment liquide et de la tenue sur le boîtier (7) de la gaine (3). On voit la gaine (3) tenue par 2 pièces accessoires: la pièce (19) en plastique semi-souple possèdant une lèvre souple (19a) d'étanchéité et encliquetée en (19b) sur le corps; et une pièce (18) qui est une rondelle en acier ressort découpée genre anneau TRUARC ou NOMEL et qui tient de façon inarrachable la gaine (3). Le système a l'avantage d'accepter des tolérances larges sur le diamètre de la gaine (3). Le montage de la gaine est à montage instantané par simple emmanchement.

Il n'a pas été représenté sur les dessins le banderolage du dessus du couvercle, lequel sera rabattu sur les deux extrémités pour couvrir les pattes (8d) du couvercle (8) (figure 6) et tous les jeux entre le couvercle (8) et le boîtier (7). Le banderolage est mis pour protéger le couvercle du ciment et le garder très propre et facilement démontable. Le banderolage est enlevé avant passage des tubes (4) de la plomberie; il est nécessaire et fait partie de l'invention.

L'invention montre les boîtiers en plastique noyés dans la maçonnerie pour faciliter le passage des tubes plastiques et l'avènement d'une nouvelle plomberie entièrement en tubes plastiques. L'invention ne se limite pas aux boîtiers décrits mais à tous types conformes à l'invention.

Mais l'invention n'a pas pour domaine uniquement l'emploi pour l'eau, le sanitaire et la chauffage, mais également beaucoup d'industries telles que les bâtiments des usines, bureaux, laboratoires et aussi le transport de tous les fluides par des tubes en plastique à travers des dalles, des planchers en maçonnerie, aussi bien pour les liquides que pour les gaz en industries mécanique, alimentaire, chimique, pétrolière, agricole, etc. L'invention doit permettre une baisse importante des coûts d'installation des tubes plastiques dans tous les bâtiments.

## Revendications

1. Boîtiers de forme parallélépipédique destinés au passage de fluides sous pression dans une maçonnerie, lesdits boîtiers étant noyés par paire dans la maçonnerie, liés solidairement par des gaines en plastique également noyées simultanément dans la maçonnerie, et permettant l'installation ou le changement de tubes en plastique pour fluides sous pression devant transiter dans la maçonnerie, lesdits boîtiers faisant office d'entrée ou de sortie desdits tubes sous pression et les orientant à la sortie de la maçonnerie dans une direction prédéterminée, caractérisés en ce qu'un couvercle (8, 90) rectangulaire, lisse, affleurant le dessus du boîtier (7g, 9g, 17g), présente au moins une capsule à découper (8c, 10c), en ce que le côté des boîtiers à l'opposé des capsules (8c, 10c) comporte le même nombre de courtes tubulures (7h, 9h, 17h) que de capsules, chaque tubulure servant à loger l'extrémité d'une gaine (3), en ce que des rainures (7i, 17i) courbées suivant un quart de cercle relient intérieurement des passages ovales (8f), obtenus quand on enlève les capsules (8c, 10c), et les tubulures (7h, 9h, 17h), pour guider latéralement avec jeu les tubes sous pression (4), et en ce qu'une molette (11) est montée libre en rotation sur un axe transversal (12), au-dessus de chaque rainure et dans la zone médiane de celle-ci, dont le profil est complémentaire du pourtour desdits tubes, les molettes (11) servant au cintrage desdits tubes et à leur maintien au fond des rainures (7i, 17j).

2. Boîtiers selon la revendication 1, caractérisés en ce qu'ils comportent en outre, aux extrémités de chaque rainure (17i), une molette (13) à profil complémentaire du pourtour des tubes (4) pour empêcher tout frottement entre le tube (4) et la rainure (17i) et le remplacer par des contacts rotatifs.

3. Boîtiers selon la revendication 1 ou 2, caractérisés en ce que les molettes correspondantes des rainures (7i, 17i) sont montées sur des axes communs (12, 14) traversant les boîtiers (7, 9, 17) sur toute leur largeur.

4. Boîtiers selon l'une des revendications 1 à 3, caractérisés en ce que des moyens de serrage (71, 171, 19a) à l'entrée des gaines (3) et un bourrelet d'étanchéité (7s) serrant les axes (12, 14) des molettes (11, 13) dans les guidages (7k) assurent leur étanchéité au ciment liquide et au plâtre.

5. Boîtiers selon l'une des revendications 1 à 4, caractérisés en ce que leurs côtés comportent des trous de fixation permettant de les immobiliser en bonne position pendant le moulage du ciment ou du plâtre.

6. Boîtiers selon l'une des revendications 1 à 5, caractérisés en ce que leurs côtés sont échancrés pour former des pattes (7d, 9d) de longueur appropriée à l'épaisseur de la maçonnerie, de sorte que lors du moulage, le ciment ou le plâtre passe sous les boîtiers.

7. Boîtiers selon l'une des revendications 1 à 6, caractérisés en ce que les capsules (8c, 10c) sont moulées pré-tracées avec contour très mince sur le couvercle (8), (10) pour décapsulage instantané, par rupture au moment choisi, libérant les dits passages ovales (8f) pour le passage des tubes (3) avec large jeu.

8. Boîtiers selon l'une des revendications 1 à 7, caractérisés en ce qu'un ou plusieurs crans (8b), (10b) très résistants creux, permettent de faire levier avec un tournevis pour décliquetage rapide du couvercle, une ou plusieurs grosses flèches imprimées indiquant ces crans de démontage.

9. Boîtiers selon les revendications 1 à 8, caractérisés en ce que le couvercle (8), (10) est pourvu de vis de sécurité de fixation (10a).

10. Boîtiers selon l'une des revendications 1 à 9, caractérisés en ce qu'ils comportent des moyens de tenue inarrachable de la gaine (3) dans le boîtier (7), (10), (17) constitués de deux secteurs d'arêtes aiguës (7p), (7n) pénétrant dans la surface tendre de la gaine (3) pour l'immobiliser définitivement, le secteur (7p) étant fixe sur le boîtier (7), (10), (17), le secteur (7n) étant porté par un élément élastique (7r) en poutre libre mais raide pour pincer fortement la gaine (3) et faire pénétrer les arêtes aiguës (7p), (7n) dans la gaine (3).

11. Boîtiers selon l'une des revendications 1 à 10, caractérisés en ce que la tenue de la gaine (3) est réalisée par une pièce en tôle découpée (18) à tenue positive, elle-même tenue par une pièce (19) en plastique semi-souple, encliquetée (19b) sur le boîtier (7) et ayant une lèvre souple mince (19a) d'étanchéité au ciment liquide et au plâtre sur la gaine (3).

**Patentansprüche**

1. Quaderförmige Gehäuse für den Durchgang von Flüssigkeiten unter Druck in einem Mauerwerk, wobei diese Gehäuse paarweise im Mauerwerk versenkt und mit Kunststoffkanälen fest verbunden sind, die ebenfalls gleichzeitig im Mauerwerk versenkt werden und den Einbau oder Austausch von Kunststoffrohren für Druckflüssigkeiten gestatten, die im Mauerwerk strömen sollen, wobei diese Gehäuse als Einlaß oder Auslaß dieser Druckrohre dienen und sie beim Verlassen des Mauerwerks in eine vorgegebene Richtung ausrichten, dadurch gekennzeichnet, daß ein rechteckiger glatter, mit dem Oberteil des Gehäuses (7g, 9g, 17g) bündig liegender Deckel (8, 90) mindestens eine auszustanzende Kapsel (8c, 10c) aufweist, dadurch, daß die den Kapseln (8c, 10c) gegenüberliegende Seite der Gehäuse ebensoviele kurze Stutzen (7h, 9h, 17h) wie Kapseln umfaßt, wobei jeder Stutzen dazu dient, das Ende eines Kunststoffkanals (3) unterzubringen, dadurch, daß viertelkreisförmig gekrümmte Rillen (7i, 17i) ovale Öffnungen (8f), die erhalten werden, wenn die Kapseln (8c, 10c) entfernt werden, und die Stutzen (7h, 9h, 17h) innen verbinden, um die unter Druck stehenden Rohre (4) seitlich mit Spiel zu führen, und dadurch, daß eine Rolle (11) auf einer Querachse (12) frei drehend über jeder Rille und im Mittelbereich derselben montiert ist, dessen Profil komplementär zu dem Umfang dieser Rohre ist, wobei die Rollen (11) zum Biegen dieser Rohre und ihrem Festhalten am Boden der Rillen (7i, 17j) dienen.

2. Gehäuse nach Anspruch 1, dadurch gekennzeichnet, daß sie außerdem an den Enden jeder Rille (17i) eine Rolle (13) mit einem zu dem Umfang der Rohre (4) komplementären Profil umfassen, um jegliche Reibung zwischen dem Rohr (4) und der Rille (17i) zu vermeiden und sie durch Wälzkontakt zu ersetzen.

3. Gehäuse nach Anspruch 1 oder 2, dadurch gekennzeichnet, daß die entsprechenden Rollen der Rillen (7i, 17i) auf gemeinsamen Achsen (12, 14) montiert sind, welche die Gehäuse (7, 9, 17) auf deren ganzen Länge durchqueren.

4. Gehäuse nach einem der Ansprüche 1 bis 3, dadurch gekennzeichnet, daß Spannmittel (7 1, 17 1, 19a) am Eingang der Kunstoffkanäle (3) und ein Dichtungswulst (7s) die Achsen (12, 14) der Rollen (11, 13) in Führungen (7k) drücken und ihre Abdichtung gegenüber dem flüssigen Zement und dem Gips sicherstellen.

5. Gehäuse nach einem der Ansprüche 1 bis 4, dadurch gekennzeichnet, daß ihre Seiten Befestigungslöcher umfassen, die gestatten, sie in der richtigen Lage während des Zement oder Gips-Vergusses festzuhalten.

6. Gehäuse nach einem der Ansprüche 1 bis 5, dadurch gekennzeichnet, daß ihre Seiten gebuchtet sind, um Haltefüße (7d, 9d) von einer für die Dicke des Mauerwerks geeigneten Länge zu bilden, so daß beim Verguß der Zement oder Gips unter den Gehäusen hindurchgeht.

7. Gehäuse nach einem der Ansprüche 1 bis 6, dadurch gekennzeichnet, daß die Kapseln (8c, 10c) auf dem Deckel (8), (10) für sofortige Kapselentfernung durch Ausbrechen im gewählten Augenblick mit sehr schmaler Kontur vorgeformt werden und dabei diese ovalen Öffnungen (8f) für den Durchgang der Rohre (3) mit breitem Spiel freigeben.

8. Gehäuse nach einem der Ansprüche 1 bis 7, dadurch gekennzeichnet, daß eine oder mehrere sehr widerstandsfähige 50z hohle Rastkerben (8b), (10b) mit einem als Hebel wirkenden Schraubenzieher das schnelle Ausrasten des Deckels gestatten, wobei einer oder mehrere dicke aufgedruckte Pfeile diese Abnahmerasten anzeigen.

9. Gehäuse nach den Ansprüchen 1 bis 8, dadurch gekennzeichnet, daß der Deckel (8), (10) mit Sicherheits-Befestigungsschrauben (10a) versehen ist.

10. Gehäuse nach einem der Ansprüche 1 bis 9, dadurch gekennzeichnet, daß sie Mittel für das abreißfeste Verhalten des Kunststoffkanals (3) im Gehäuse (7), (10), (17) umfassen, die aus zwei scharfkantigen Abschnitten (7p), (7n) bestehen, die in die weiche Oberfläche des Kunststoffkanals (3) eindringen, um sie endgültig festzuhalten, wobei der Abschnitt, (7p) auf dem Gehäuse (7), (10), (17) befestigt ist, und der Abschnitt (7n) von einem elastischen Element (7r) als freischwebender, jedoch steifer Träger getragen wird, um den Kunststoffkanal (3) fest einzuklemmen und die scharfen Kanten (7p), (7n) in den Kunststoffkanal (3) eindringen zu lassen.

11. Gehäuse nach einem der Ansprüche 1 bis 10, dadurch gekennzeichnet, daß der Halt des Kunststoffkanals (3) von einem Stanzblechteil (18) positiven Verhaltens verwirklicht wird, das seinerseits von einem halbelastischen Kunststoffteil (19) gehalten wird, das auf dem Gehäuse (7) eingerastet (19b) ist und eine schmale elastische Dichtungslippe (19a) zur Abdichtung gegen den flüssigen Zement und den Gips auf dem Kunststoffkanal (3) hat.

**Claims**

1. Casings of parallelepipedic shape intended for the passage of fluids under pressure in masonry, the said casings being embedded in pairs in the masonry, linked integrally by sheaths of plastics material likewise embedded simultaneously in the masonry, and permitting the installation or the changing of tubes of plastics material for fluids under pressure which are to pass through the masonry, the said casings acting as inlet or outlet of the said tubes under pressure and orienting them at the outlet from the masonry in a predetermined direction, characterized in that a smooth, rectangular cover (8, 90), flush with the top of the casing (7g, 9g, 17g), presents at least one capsule to be cut off (8c, 10c), in that the side of the casings opposite the capsules (8c, 10c) comprises the same number of short pipes (7h, 9h, 17h) as capsules, each pipe serving to house the end of a sheath (3), in that grooves (7i, 17i) which are curved following a quarter of a circle internally connect oval passages (8f), obtained when the capsules (8c, 10c) are removed, and the pipes (7h, 9h, 17h), to guide laterally with play the tubes under pressure (4), and in that a milled nut (11) is mounted freely in rotation on a transverse axis (12), above each groove and in the median zone of the latter, the section of which is complementary to the periphery of the said tubes, the milled nuts (11) serving for the bending of the said tubes and for their being held at the base of the grooves (7i, 17j).

2. Casings according to Claim 1, characterized in that they further comprise, at the ends of each groove (17i), a milled nut (13) having a section complementary to the periphery of the tubes (4) to prevent any friction between the tube (4) and the groove (17i) and to replace it with rotary contacts.

3. Casings according to Claim 1 or 2, characterized in that the correzponding milled nuts of the grooves (7i, 17i) are mounted on common axes (12, 14) passing through the casings (7, 9, 17) over their entire width.

4. Casings according to one of Claims 1 to 3, characterized in that gripping means (71, 171, 19a) at the inlet of the sheaths (3) and a tightness flange (7s) gripping the axes (12, 14) of the milled nuts (11, 13) in the guides (7k) ensure their tightness to the liquid cement and to the plaster.

5. Casings according to one of Claims 1 to 4, characterized in that their sides comprise attachment holes allowing them to be secured in a good position during the casting of the cement or plaster.

6. Casings according to one of Claims 1 to 5, characterized in that their sides are notched to form tabs (7d, 9d) of a length appropriate to the thickness of the masonry, such that on casting, the cement or plaster passes beneath the casings.

7. Casings according to one of Claims 1 to 6, characterized in that the capsules (8c, 10c) are cast pre-traced with a very thin contour on the cover (8), (10) for instantaneous removal of the capsule, by rupture at the selected moment, freeing the said oval passages (8f) for the passage of the tubes (3) with a wide play.

8. Casings according to one of Claims 1 to 7, characterized in that one or more catches (8b), (10b), which are very resistant and hollow, allow leverage with a screwdriver for rapid release of the cover, one or more large printed arrows indicating these dismantling catches.

9. Casings according to Claims 1 to 8, characterized in that the cover (8), (10) is provided with a security fixing screw (10a).

10. Casings according to one of Claims 1 to 9, characterized in that they comprise means for non-removable holding of the sheath (3) in the casing (7), (10), (17), constituted by two sectors of pointed edges (7p), (7n) penetrating into the soft surface of the sheath (3) to secure it permanently, the sector (7p) being fixed on the casing (7), (10), (17), the sector (7n) being carried by an elastic element (7r) as a free but rigid beam to strongly grip the sheat (3) and cause the pointed edges (7p), (7n) to penetrate into the sheath (3).

11. Casings according to one of Claims 1 to 10, characterized in that the holding of the sheath (3) is realized by a piece of cut sheeting (18), with positive holding, which is itself held by a piece (19) of semi-flexible plastics material, ratched (19b) on the casing (7) and having a thin flexible lip (19a) for tightness with respect to the liquid cement and to the plaster on the sheath (3).

FIG.1

FIG.2

FIG.3

FIG.4

FIG.5

FIG.7

FIG.6

EP 0 276 191 B1

FIG.8

FIG.9

FIG.10

EP 0 276 191 B1

FIG.11

FIG.12

5b

4

11

7i

7g

7

2a

2

8

7

2

7i

18

19a

19

3

4

3

7d

EP 0 276 191 B1